# EUROPÄISCHE PATENTSCHRIFT

(11) **EP 0 465 811 B1**
(45) Veröffentlichungstag und Bekanntmachung des Hinweises auf die Patenterteilung: **14.12.1994**
(21) Anmeldenummer: 91108603.1
(22) Anmeldetag: 27.05.1991
(51) Int. Cl.: A01K 31/04

(54) **Käfiganlage für Geflügelzuchtbetriebe**
Cage installation for rearing poultry
Installation de cages pour l'élevage avicole

(30) Priorität: 11.07.1990 DE 4022040
(43) Veröffentlichungstag der Anmeldung: 15.01.1992
(73) Patentinhaber: Kühlmann, Josef, D-48366 Laer (DE)
(72) Erfinder: Kühlmann, Josef, D-48366 Laer (DE)
(74) Vertreter: Habbel, Hans-Georg, Dipl.-Ing.

(56) Entgegenhaltungen:
- WO-A-88/05258

## Beschreibung

Die Erfindung bezieht sich auf eine Kotförderanlage gemäß dem Oberbegriff des Hauptanspruches.

Eine gattungsbildende Kotförderanlage ist in der WO 88/05 258 (EP-A-299 015) beschrieben. Bei dieser bekannten Anordnung werden dann, wenn der Trocknungstunnel oberhalb der Käfigreihen angeordnet ist, alle Kotförderbänder über eine gemeinsame Preßwalze geführt. Hierzu wird ausgeführt, daß die sich auf den Oberseiten der Kotförderbänder befindende Kotschicht auf das Band aufgepreßt werde, wobei durch die Zusammenführung der verschiedenen Kotförderbänder ein dichtes Aufpressen der jeweils auf den Bändern befindlichen Kotschicht erfolge. Anschließend werden dann diese Bänder in vertikaler Richtung nach oben geführt und dann zurück durch den Trocknungskanal.

In der Praxis hat sich herausgestellt, daß diese Ausführungsform zu betrieblichen Schwierigkeiten führen kann. Insbesondere nach längerer Betriebsdauer tritt ein solches Verschmutzen der Oberfläche der Preßwalzen und der Bänderseiten ein, so daß ein wirksames Umlenken und Fördern in Frage gestellt ist.

Der Erfindung liegt die Aufgabe zugrunde, die gattungsbildende Einrichtung dahingehend zu verbessern, daß die Umlenkung der mit Kot beladenen Förderbänder auch bei langer Betriebszeit problemlos erfolgt und daß hier eine den Trocknungsvorgang fördernde günstige Beeinflussung der Kotschicht erfolgt.

Diese der Erfindung zugrundeliegende Aufgabe wird durch die Lehre des Hauptanspruches gelöst.

Vorteil hafte Ausgestaltungen dieser grundsätzlichen Lehre sind in den Unteransprüchen erläutert.

Mit anderen Worten ausgedrückt ist nunmehr jedem Kotförderband im unteren Bereich der Käfiganlage eine eigene Umlenk- und Preßwalze zugeordnet und überraschend hat sich herausgestellt, daß durch den Einsatz von jedem einzelnen Band zugeordneten Umlenk- und Preßwalzen die bei der Anordnung einer gemeinsamen Umlenk- und Preßwalze entstehenden Schwierigkeiten aufgehoben werden.

Wesentliche Vorteile bringt weiterhin die Ausbildung der oberen Umlenk- und Preßwalzen. Auch hier ist wiederum jedem Band eine eigene Umlenk- und Preßwalze zugeordnet. Diese sind vorzugsweise als Exzenterwalzen ausgebildet, d. h. zwei benachbarte Walzen laufen um Zu der Walzenmitte exzentrische Achsen um, und zwar derart, daß die Umfangsseite der beiden zusammenwirkenden Walzen einmal sehr nahe beieinandersteht, d. h. der Abstand nahezu null ist, zum andern in der anderen Extremstellung ein möglichst großer Spalt zwischen den beiden Walzen gebildet wird, der bei der Erfindung beispielsweise 25 mm beträgt. Durch diese vollkommen ungewöhnliche Anordnung wird erreicht, daß der Kot vor Einlauf in den Trockentunnel auf dem Band wellenförmig ausgebildet ist und dadurch eine erhebliche Oberflächenvergrößerung erfährt.

Zum andern wird durch diese Anordnung erreicht, daß die schon mögliche äußere, angetrocknete Haut eines Kotbällchens wieder aufgerissen wird, so daß eine möglichst große Oberfläche des Kotbällchens der Trocknungsluft im Trockentunnel ausgesetzt wird.

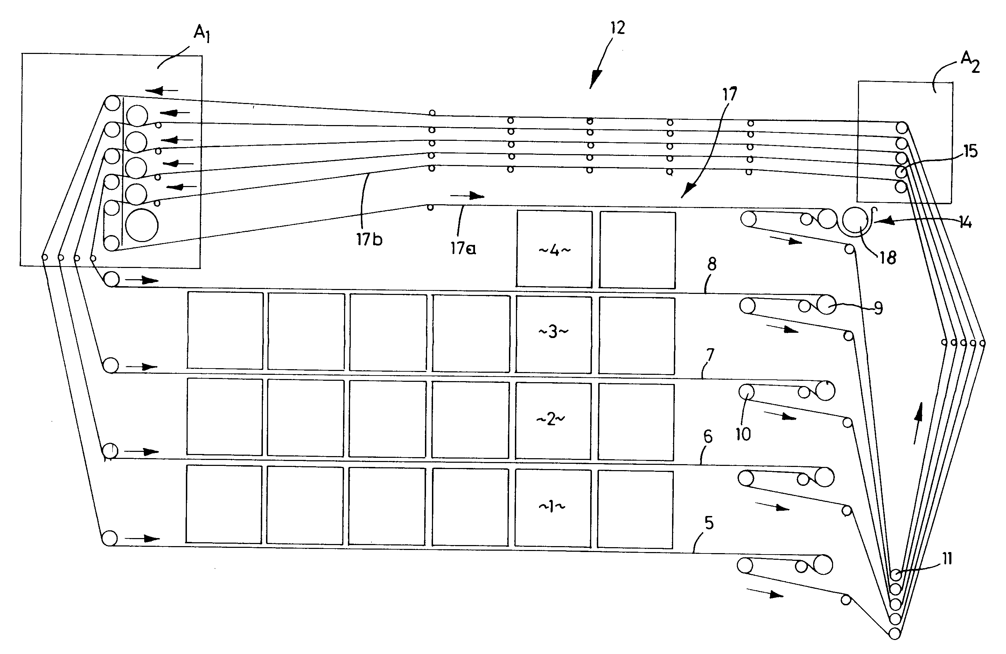

Ein Ausführungsbeispiel der Erfindung wird nachfolgend anhand der Zeichnung erläutert.

Die Zeichnung zeigt dabei rein schematisch die Anordnung der verschiedenen Bänder zueinander.

In der Zeichnung sind mit 1, 2, 3 und 4 vier übereinander angeordnete Käfigreihen bezeichnet, die an sich bekannter Ausbildung sind, so daß sie hier nicht weiter erläutert werden müssen. Unterhalb jeder Käfigreihe ist ein Kotförderband 5, 6, 7 und 8 angeordnet. Aus dem entsprechend gitterartig ausgebildeten Boden jeder Käfigreihe gelangt der Kot auf die Oberseite jedes Kotförderbandes 5 bis 8. Die Kotförderbänder 5 bis 8 werden durch einen in der Zeichnung nicht besonders dargestellten Antrieb und z. B. Antriebsrollen 9 angetrieben. Umlenkrollen sind weiterhin in einem Getriebegehäuse A₁ untergebracht. Der Antrieb erfolgt vorzugsweise langsam und intermittierend in Abhängigkeit der anfallenden Kotmenge.

Das mit Kot beladene Trum jedes Kotförderbandes 5 bis 8 wird dann am Ende jeder Käfigreihe 1 bis 4 über entsprechende Umlenkrollen 10 zu Umlenk- und Preßwalzen 11 geführt. Hierbei ist jedem einzelnen Kotförderband 5 bis 8 eine eigene Umlenk- und Preßwalze 11 zugeordnet, wobei diese Umlenk- und Preßwalzen 11 die auf der Oberseite des Kotförderbandes 1 bis 4 befindende jeweilige Kotschicht auf das Band aufpreßt. Durch diese Umlenk- und Preßwalzen erfolgt also eine Bearbeitung des Kotes, insbesondere des schon auf dem langen Weg angetrockneten Kotes. Anschließend werden die Kotförderbänder 5 bis 8 in vertikaler Richtung nach oben gefördert und über in einem Getriebegehäuse A₂ angeordnete Umlenk- und Preßwalzen 15 umgelenkt und in einen nicht dargestellten Trockentunnel 12 geführt. In diesem Trockentunnel 12 werden die Bänder 5 bis 8 wieder im Abstand geführt, indem entsprechende Führungsrollen und sonstige Einrichtungen vorgesehen sind. Der Kanal 12 kann mit einem Gebläse ausgerüstet sein, das etwa mittig über die Längsachse jeder Käfigreihe gesehen am Kanal angeordnet ist und z. B. als Sauggebläse ausgebildet ist. Hierdurch wird - da vorzugsweise die Tunnelstirnseiten offen sind - durch diese offenen Stirnseiten, die dadurch als Luftansaugöffnungen wirken, aus dem eigentlichen Stallgebäude relativ warme Stalluft durch den Kanal angesaugt und durch das Gebläse abgeführt. Hierbei bestreicht die Luft die Kotschicht auf den im Trockentunnel 12 befindlichen Kotförderbändern 5 bis 8 und da die Kotförderbänder 5 bis 8 entsprechend langsam umlaufen, der Kanal 12 entsprechend lang ausgebildet ist, erfolgt eine vollkommene Trocknung des auf den Kotförderbändern 5 bis 8 befindlichen Kotes.

Unterhalb der durch den Trockentunnel 12 geführten Trume der Kotförderbänder 5 bis 8 ist ein Trockenkotband 17 vorgesehen, das parallel zu der Förderrichtung der Kotförderbänder 5 bis 8 ausgerichtet ist und dessen Obertrum innerhalb des Kanal es liegt, während das rücklaufende Trum 17a außerhalb des Kanales verlegt wird. Da die Kotschicht an den Kotförderbändern 5 bis 8 innerhalb des Kanales an der Unterseite der Bänder angeordnet ist, fallen die getrockneten Kotpartikelchen innerhalb des Kanales auf das Obertrum 17b des Trockenkotbandes 17 und werden am Ende des Kanales von diesem Band abgeleitet auf das rücklaufende Trum 17a. Dieses rücklaufende Trum 17a gibt im Bereich der ihm zugeordneten Umlenkrolle 10 den Trockenkot an eine Abfördervorrichtung 14 ab, die beispielsweise mit einer Schnecke 18 ausgerüstet ist.

Die unteren Umlenk- und Preßwalzen 11 laufen mit einer Umlaufgeschwindigkeit um, die das Zwei- bis Sechsfache der Bandgeschwindigkeit der Kotförderbänder 5 bis 8 beträgt. Die Umlaufgeschwindigkeit der oberen Umlenk- und Preßwalzen 15 beträgt vorzugsweise das Zehnfache der Bandgeschwindigkeit, so daß hier ein gutes Durcharbeiten des zwischen den Umlenk- und Preßwalzen 15 zusammengepreßten Kotes erfolgt.

## Patentansprüche

1. Käfiganlage für Geflügelzuchtbetriebe mit umlaufenden, unterhalb der in vertikaler Richtung übereinander angeordneten Käfigreihen (1 - 4) angeordneten Kotförderbändern (5 - 8), einer Abfördervorrichtung (14), die den Trockenkot ausfördert, einem parallel zur Längsachse der Käfigreihen oberhalb der Käfigreihen in Längsrichtung der Käfigreihe verlaufenden Trocknungstunnel (12), eine schneller als das Band umlaufende Umlenk- und Preßwalze (11), die die Kotschicht des mit Kot beladenen Trums des Kotförderbandes (5 - 8) auf das Band aufpreßt und das Band in vertikaler Richtung nach oben umlenkt, wobei die Kotförderbänder (5 - 8) umgelenkt durch den Trockentunnel (12) geführt sind und die Kotseite der Kotförderbänder (5 - 8) innerhalb des Trockentunnels (12) nach unten gerichtet ist, dadurch gekennzeichnet, daß jedem Kotförderband (5 - 8) eine eigene untere Umlenk- und Preßwalze (11) zugeordnet ist und auch jedem Kotförderband (5 - 8) vor Einlauf in den Trockentunnel (12) eine eigene obere Umlenk- und Preßwalze (15) zugeordnet ist.

2. Käfiganlage nach Anspruch 1, dadurch gekennzeichnet, daß die Umlenk- und Preßwalzen (15) als Exzenterwalzen ausgebildet und so eingestellt sind, daß sie sich in der einen Extremstellung nahezu berühren (Abstand etwa gleich Null ) und in der anderen Extremstellung am weitesten voneinander entfernt sind.

3. Käfiganlage nach Anspruch 1 oder 2, dadurch gekennzeichnet, daß der Abstand der beiden jeweils zusammenwirkenden oberen Umlenk- und Preßwalzen (15) voneinander in der anderen Extremstellung etwa 25 mm beträgt.

4. Käfiganlage nach Anspruch 1, 2 oder 3, dadurch gekennzeichnet, daß die Umdrehungsgeschwindigkeit der oberen Umlenk- und Preßwalzen (15) etwa das Zehnfache der Geschwindigkeit des Kotförderbandes (5 - 8) beträgt.

5. Käfiganlage nach einem oder mehreren der vorhergehenden Ansprüche, dadurch gekennzeichnet, daß die Umlaufgeschwindigkeit der unteren Umlenk- und Preßwalzen (11) etwa das Zwei- bis Sechsfache der Geschwindigkeit der Kotförderbänder (5 - 8) beträgt.

## Claims

1. A cage arrangement for poultry breeding businesses, comprising revolving excrement conveyor belts (5 - 8) arranged below the cage rows (1 - 4) arranged one above the other in the vertical direction, a removal device (14), which extracts the dry excrement, a tunnel drier (12) running in parallel with the longitudinal axis of the cage rows above the cage rows in the longitudinal direction of the cage rows, a deflecting and press roller (11) revolving faster than the belt, which roller (11) presses the excrement layer of the strand of the excrement conveyor belt (5 - 8) loaded with excrement onto the belt and deflects the belt upwards in the vertical direction, the excrement conveyor belts (5 - 8) being guided deflectedly through the tunnel drier (12) and the excrement side of the excrement conveyor belts (5 -8) being directed downwards inside the tunnel drier (12), characterized in that each excrement conveyor belt (5 - 8) has its own lower deflecting and press roller (11) associated with it and each excrement conveyor belt (5 - 8) also has its own upper deflecting and press roller (15) associated with it before entry into the tunnel drier (12).

2. A cage arrangement according to claim 1, characterized in that the deflecting and press rollers (15) are constructed as eccentric rollers and are so adjusted that in one extreme position they virtually touch each other (spacing approximately equal to nil) and in the other extreme position they are at the greatest distance from each other.

3. A cage arrangement according to claim 1 or claim 2, characterized in that the spacing from each other of the two interacting upper deflecting and press rollers (15) amounts in the other extreme position to approximately 25 mm.

4. A cage arrangement according to claim 1, claim 2 or claim 3, characterized in that the speed of revolution of the upper deflecting and press rollers (15) amounts to approximately ten times the speed of the excrement conveyor belt (5 - 8).

5. A cage arrangement according to any one of the preceding claims, characterized in that the speed of revolution of the lower deflecting and press rollers (11) amounts to approximately two to six times the speed of the excrement conveyor belts (5 - 8).

## Revendications

1. Installation de cages pour les élevages de volaille avec des bandes de transport des fientes (5-8) continues, disposées en-dessous des rangées de cages (1-4) disposées les unes au-dessus des autres dans le sens vertical, un dispositif d'évacuation (14) qui évacue la fiente sèche, un tunnel de séchage (12) orienté parallèlement à l'axe longitudinal des rangées de cages au-dessus des rangées de cages dans le sens longitudinal de la rangée de cage, un rouleau de déviation et presseur (11) tournant plus vite que la bande, qui presse la couche de fiente du brin chargé de fiente de la bande de transport des fientes (5-8) sur la bande et dévie la bande dans le sens vertical vers le haut, dans laquelle les bandes de transport des fientes (5-8) sont guidées après déviation à travers le tunnel de séchage (12) et le côté garni de fientes des bandes de transport des fientes (5-8) est orienté vers le bas à l'intérieur du tunnel de séchage (12), caractérisée en ce que chaque bande de transport des fientes (5-8) est associé à son propre rouleau de déviation et presseur inférieur (11) et chaque bande de transport des fientes (5-8) est aussi associée avant l'entrée dans le tunnel de séchage (12) à son propre rouleau de déviation et presseur supérieur (15).

2. Installation de cages selon la revendication 1, caractérisée en ce que les rouleaux de déviation et presseurs (15) sont conçus comme des rouleaux excentriques et réglés de telle sorte qu'ils se touchent presque dans une position extrême (écart approximativement nul) et sont éloignés aussi loin que possible l'un de l'autre dans l'autre position extrême.

3. Installation de cages selon la revendication 1 ou 2, caractérisée en ce que la distance dans l'autre position extrême entre les deux rouleaux de déviation et presseurs supérieurs (15) coopérant entre eux est d'environ 25 mm.

4. Installation de cages selon la revendication 1, 2 ou 3, caractérisée en ce que la vitesse de rotation des rouleaux de déviation et presseurs supérieurs (15) est d'environ dix fois la vitesse de la bande de transport des fientes (5-8).

5. Installation de cages selon l'une ou l'ensemble des revendications précédentes, caractérisée en ce que la vitesse de rotation des rouleaux de déviation et presseurs inférieurs (11) est d'environ deux à six fois la vitesse des bandes de transport des fientes (5-8).
